Europäisches Patentamt

European Patent Office

Office européen des brevets

(19)

(11) Veröffentlichungsnummer: **0 291 071 B1**

(12) **EUROPÄISCHE PATENTSCHRIFT**

(45) Veröffentlichungstag der Patentschrift: **22.07.92**

(21) Anmeldenummer: **88107700.2**

(22) Anmeldetag: **13.05.88**

(51) Int. Cl.⁵: **F16D 65/16**, F16D 65/56, F16D 55/224

(54) **Scheibenbremse für Fahrzeuge.**

(30) Priorität: **14.05.87 DE 3716202**

(43) Veröffentlichungstag der Anmeldung:
**17.11.88 Patentblatt 88/46**

(45) Bekanntmachung des Hinweises auf die
Patenterteilung:
**22.07.92 Patentblatt 92/30**

(84) Benannte Vertragsstaaten:
**AT BE DE FR GB IT NL**

(56) Entgegenhaltungen:
**DE-A- 3 544 475
DE-A- 3 610 569
US-A- 3 371 753**

(73) Patentinhaber: **KNORR-BREMSE AG
Moosacher Strasse 80 Postfach 401060
W-8000 München 40(DE)**

(72) Erfinder: **Bieker, Dieter
Fichtenstrasse 86
W-5630 Remscheid(DE)**

(74) Vertreter: **KUHNEN, WACKER & PARTNER
Alois-Steinecker-Strasse 22 Postfach 1553
W-8050 Freising(DE)**

**Beschreibung**

Die Erfindung betrifft eine Scheibenbremse für Fahrzeuge, insbesondere Straßenfahrzeuge, mit einem auf einer Seite einer Bremsscheibe eine Zuspannvorrichtung aufweisenden Bremssattel, wobei die Zuspannvorrichtung einen um eine Drehachse drehbaren Exzenter aufweist, der mittels eines Drehhebels (8) drehbar ist, der radial von der Drehachse (10) auskragt, die ihrerseits die Achse (9) der Bremsscheibe (2) rechtwinklig kreuzt, und wobei der Exzenter (16) über ein parallel zur Achse der Bremsscheibe verschiebliches Drückstück mit integrierter Spielnachstellvorrichtung mit einer verschieblich im Bremssattel gelagerten Bremsbacke in Wirkverbindung steht.

Eine derartige Scheibenbremse ist beispielsweise aus der US-A-3 371 753 bekannt. Der Exzenter wirkt hierbei unmittelbar mit der der Bremsscheibe abgewandten Stirnfläche des Druckstückes zusammen, an den gegenseitigen Anlageflächen tritt daher beim mechanischen Zuspannen der Scheibenbremse den Wirkungsgrad für die Zuspannkraft mindernde Reibung mit entsprechendem Verschleiß auf. Außerdem ist offensichtlich nur ein etwa mittig an der Bremsbacke angreifender Druckstößel vorgesehen, durch diese zentrale Krafteinleitung in die Bremsbacke ist keine über deren Länge gleichmäßige Anpressung an die Bremsscheibe gewährleistet.

Zum Mindern der durch Gleitlagerungen bedingten Reibung mit ihren negativen Auswirkungen hinsichtlich Verschleiß und Wirkungsgrad und zum Erzielen eines großen Übersetzungsverhältnisses ist es aus der DE-C-26 14 321 bekannt, den Drehhebel bremsscheibenabgewandt mit einer Wälzfläche, mit welcher er sich an einer ebenen Widerlagerfläche des Bremssattels abstützt, und bremsscheibenseitig mit einer Führungsbahn für eine Rolle zu versehen, welche andererseits an einer stirnseitigen, ebenen Fläche des Druckstößels abrollbar ist. Zum Haltern des in Bewegungsrichtung zu seiner Lage bei gelöster Scheibenbremse von einer Feder belasteten Drehhebels ist ein in eine Ausnehmung des letzteren eingreifender Stift vorgesehen; diese Stiftlagerung kann zu Zwängungen führen, außerdem kann der Drehhebel bei großen Bremshüben aus dieser Stiftlagerung ausrasten. Auch bei dieser Scheibenbremse ist offensichtlich nur eine Zuspannvorrichtung vorgesehen, welche zentral an der Bremsbacke angreift.

Mit der nicht vorveröffentlichten DE-Anmeldung DE-A-36 10 569 wurde bereits eine Bremsscheibe mit einem zentralen Drehhebel vorgesehen, wobei der Drehhebel über ein Synchrongetriebe auf zwei zu seinen beiden Seiten angeordnete Druckstößel einwirkt. Das Synchrongetriebe umfaßt dabei einen Zahnriemen- bzw. Kettenantrieb, der den Druckstücken zugehörende Zahnräder antreibt. Durch die Doppelanordnung der Druckstücke wird eine gleichmäßige und einen Schrägverschleiß ausschließende Anpressung der Bremsbacke gewährleistet.

Aus der ebenfalls nicht vorveröffentlichten DE-Anmeldung DE-A-35 44 475 ist es zur Aufnahme von Querverschiebungen an der Kraftabgabe von Druckstößeln bekannt, an den Druckstößeln eine begrenzt querverschiebliche Druckplatte zu haltern, die über eine ebene Rollenlagerung gegen eine Radialfläche des Druckstößels abgestützt ist.

Der Erfindung liegt die Aufgabe zugrunde, eine Scheibenbremse der eingangs genannten Art derart auszugestalten, daß sie in ihrer Zuspannvorrichtung keine gleitreibungsbehafteten Teile aufweist und somit gleitreibungsbedingten Verschleiß und Wirkungsgradminderungen vermeidet. Außerdem soll durch eine Doppelanordnung der synchron zu betätigenden und nachzustellenden Druckstößel eine gleichmäßige und Schrägverschleiß ausschließende Anpressung der Bremsbacke an die Bremsscheibe erreicht werden. Weiterhin soll die Scheibenbremse einen einfachen Aufbau aus wenigen, robust gestaltbaren Einzelteilen aufweisen, wodurch niedrige Herstellungskosten und eine hohe Funktionssicherheit bei langen, wartungsfreien Betriebszeiten der Scheibenbremse erreichbar ist.

Diese Aufgabe wird nach der Erfindung durch die Kombination der Merkmale gelöst, daß

- der Drehhebel beidseitig je einen etwa halbzylindrischen Ansatz trägt, deren in der Bremsscheibe und dem Exzenter abgewandte, zur Drehachse gleichachsige, halbzylindrische Flächen über je eine Rollenlagerung gegen entsprechend innenzylindrische Flächen des Bremssattels drehbar abgestützt sind,

- die beiden Ansätze bremsscheibenseitig und den halbzylindrischen Flächen abgewandt den über ihre axiale Länge durchgehend ausgebildeten Exzenter tragen,

- am Exzenter bremsscheibenseitig eine zur Radialebene der Bremsscheibe parallel laufende Druckplatte anliegt, die andererseits über eine ebene Rollenlagerung tangential zum Exzenter begrenzt verschieblich am mittleren Bereich einer Traverse abgestützt ist,

- die sich parallel zur Radialebene der Bremsscheibe erstreckende Traverse senkrecht zu dieser Radialebene verschieblich am Bremssattel gelagert ist und an ihren beiden Enden mit je einem sich rechtwinklig zur Radialebene erstreckenden und relativ zum Bremssattel verschieblichen Gewinderohr verschraubt ist, deren jedes gegen die Rückseite der Bremsbacke abgestützt ist, und

- die beiden Gewinderohre mittels eines sie verbindenden Synchronantriebes, bestehend aus auf den Gewinderohren axialverschieblich, aber undrehbar gelagerten Zahnrädern, nur synchron drehbar sind.

Nach der weiteren Erfindung mögliche, vorteilhafte Ausgestaltungen einer derartigen Scheibenbremse sind den Merkmalen der Unteransprüche entnehmbar.

In der Zeichnung ist ein Ausführungsbeispiel für eine nach der Erfindung ausgebildete Scheibenbremse dargestellt, und zwar zeigt

Fig.1     einen Querschnitt durch den Bremssattel,

Fig.2     linksseitig eine Ansicht eines teilweise aufgebrochen dargestellten Bremssattels und rechtsseitig einen Schnitt gemäß Linie II-II in Fig.1 durch den Bremssattel,

Fig.3     einen Schnitt entlang der Linie III-III in Fig.2 und

Fig.4a bis 4c     eine Einzelheit in unterschiedlichen Funktionsstellungen.

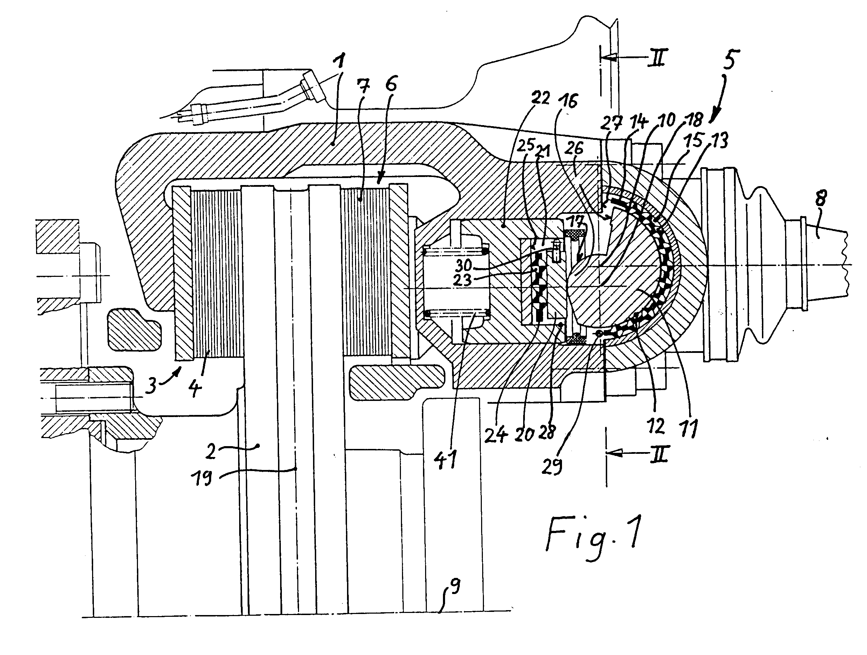

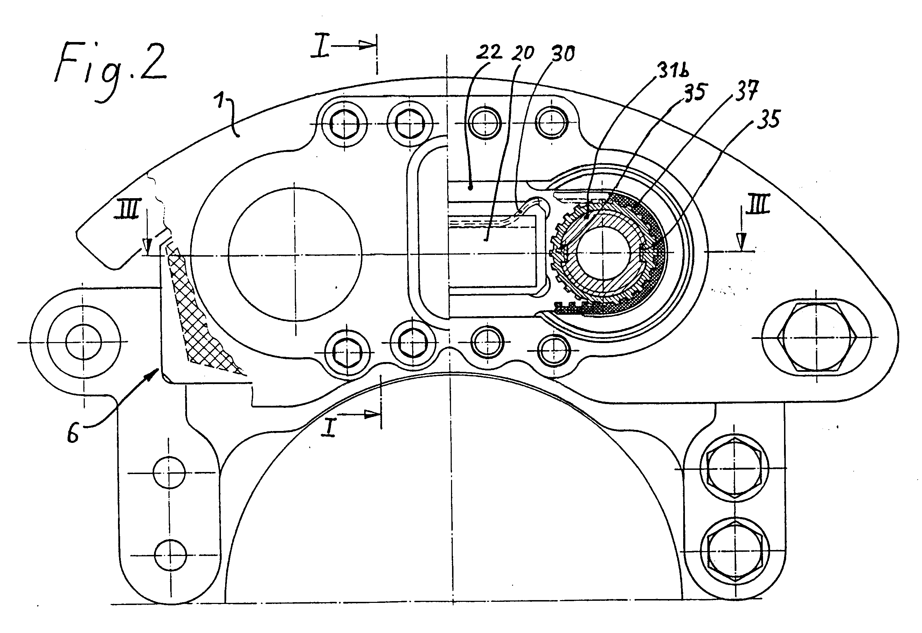

Die Scheibenbremse weist einen Sattel 1 auf, der gemäß der einen Schnitt nach Linie I-I in Fig.2 darstellenden Fig.1 eine dem abzubremsenden Fahrzeugrad zugeordnete Bremsscheibe 2 übergreift und zur einen Seite der Bremsscheibe 2 eine Bremsbacke 3 mit einem Bremsbelag 4 unmittelbar abstützt und zur anderen Seite der Bremsscheibe 2 eine Zuspannvorrichtung 5 aufweist. Der Bremssattel 1 ist vermittels üblicher, nicht dargestellter Führungsmittel quer zur Bremsscheibe 2 verschieblich gehaltert. Bezogen auf die Bremsscheibe 2 ist gegenüberliegend zur Bremsbacke 3 im Bremssattel 1 eine weitere Bremsbacke 6 mit einem Bremsbelag 7 in Querrichtung zur Bremsscheibe 2 verschieblich gelagert.

Der Zuspannvorrichtung 5 gehört ein Drehhebel 8 zu, der von einer zentralen Stelle des Bremssattel 1 seitlich auskragt. Zu seiner um eine die Achse 9 der Bremsscheibe 2 rechtwinklig überkreuzenden Drehachse 10 drehbaren Lagerung am Bremssattel 1 weist der Drehhebel 8 beidseitig je einen im Querschnitt im wesentlichen halbzylindrischen Ansatz 11 auf, deren halbzylindrischen Flächen 12 der Bremsscheibe 2 abgewandt sind. Jede halbzylindrische Fläche 12 ist über eine ebenfalls halbzylindrische Rollenlagerung 13 mit in einem Käfig 14 geführten Rollen gegen eine entsprechend innenzylindrische Fläche 15 um die Drehachse 10 drehbar abgestützt. Gegenüberliegend zu ihrem halbzylindrischen Flächen 12 und damit der Bremsscheibe 2 zugewandt tragen die beiden Ansätze 11 einen etwa über deren ganze Länge durchgehend ausgebildeten Exzenter 16, dessen wirksame Oberfläche eine Zylinderfläche 17 um eine zur Drehachse 10 parallele, jedoch etwas versetzte Achse 18 bildet. Mit seiner Zylinderfläche 17 liegt der Exzenter 16 an einer zur Radialebene 19 der Bremsscheibe 2 parallel verlaufenden Druckplatte 20 an. Die Druckplatte 20 ist in einer Ausnehmung 21 einer Traverse 22 parallel zur Radialebene 19 und tangential zur Zylinderfläche 17 des Exzenters 16 begrenzt verschieblich gelagert. Über eine ebene Rollenlagerung 23 mit in einem Käfig 24 gehaltenen Rollen ist die Druckplatte 20 auf ihrer dem Exzenter 16 abgewandten Seite gegen eine ebene Grundfläche 25 in der Ausnehmung 21 und damit gegen die Traverse 22 abgestützt.

In ihren gelöster Scheibenbremse entsprechenden Lagen liegen jeweils eine Stirnfläche der Käfige 14 und eine Anschlagfläche 26 der Ansätze 11 an einer Anschlagfläche 27 des Bremssattel 1 sowie eine Seitenfläche der Druckplatte 20 an einer Seitenwandung 28 der die Druckplatte 20 umschließenden Ausnehmung 21 an, wie es aus der diese Lösestellung zeigenden Fig.4a ersichtlich ist. Eine Feder 29 belastet die Käfige 14 und eine Feder 30 die Druckplatte 20 in Bewegungsrichtung zu diesen erwähnten Anlagen.

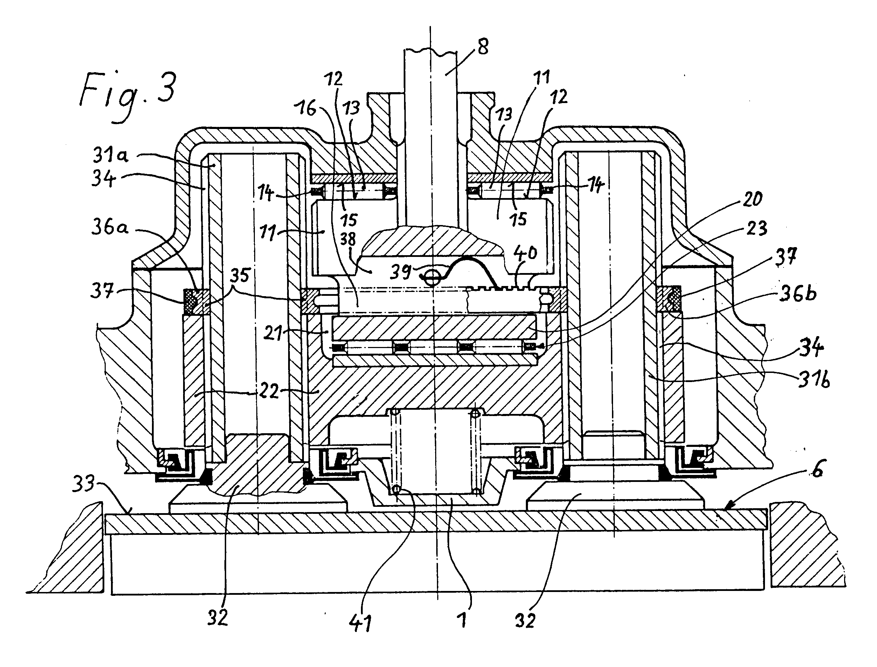

Die Traverse 22 ist senkrecht zur Radialebene 19 verschieblich im Bremssattel 1 gelagert. Die Ausnehmung 21 befindet sich mittig in der Traverse 22, die beiden Enden der Traverse 22 sind jeweils mit einem Gewinderohr 31a bzw. 31b selbsthemmend verschraubt. Die beiden Gewinderohre 31a und 32b sind senkrecht zur Radialebene 19 verschieblich im Bremssattel 1 gelagert, der Bremsscheibe 1 zugewandt tragen sie Druckstücke 32, mit welchen sie an der Rückseite 33 der Bremsbacke 6 anliegen. Die Gewinderohre 31a und 31b sind außenseitig mit ihre Gewinde durchschneidenden Längsnuten 34 versehen, in welche Innennocken 35 von auf den Gewinderohren 31a und 31b axialverschieblich, aber undrehbar gelagerten Zahnrädern 36a bzw. 36b eingreifen. In die Zahnräder 36a und 36b greift ein diese verbindender Zahnriemen 37 ein, so daß die beiden Zahnräder 36a und 36b und damit auch die beiden Gewinderohre 31a und 31b nur synchron zueinander drehbar sind. Der Zahnriemen 37 verläuft unmittelbar vor der der Bremsscheibe 2 abgewandten Seitenfläche der Traverse 22 in einem zwischen dem Exzenter 16 und den Anschlägflächen 26 liegenden Bereich; diesem Bereich zugewandt weisen die Ansätze 11 eine aus Fig.3 ersichtliche Ausnehmung 38 auf, in welcher sich eine klinkenartig geformte Blattfeder 39 befindet. Das eine Ende der Blattfeder 39 ist am Drehhebel 8 befestigt, in ihrem mittleren Bereich stützt sich die Blattfeder 39 gegen den Grund der Ausnehmung 38 ab und mit ihrem anderen Ende greift sie klinkenartig in eine Seitenverzahnung 40 des Zahnriemens 37 ein.

Gegenüberliegend zur Ausnehmung 21 ist zwischen dem Bremssattel 1 und die Traverse 22 eine Feder 41 eingespannt, welche die Traverse 22 in Entfernungsrichtung von der Bremsscheibe 2 belastet.

Bei gelöster Scheibenbremse befindet sich der Drehhebel 8 in der aus Fig.4a ersichtlichen Lage, in welcher die Stirnfläche der Käfige 14 sowie die Anschlagfläche 26 des Drehhebels 8 an der Anschlagfläche 27 des Bremssattels 1 anliegen; die Druckplatte 20 liegt dabei an der Seitenwandung 28 an. Die beiden Gewinderohre 31a und 31b befinden sich in einer solchen Einschraublage in der Traverse 22, daß die Bremsbeläge 4 und 7 der beiden Bremsbacken 3 und 6 mit geringem Lüftspiel vor der Bremsscheibe 2 gehalten werden.

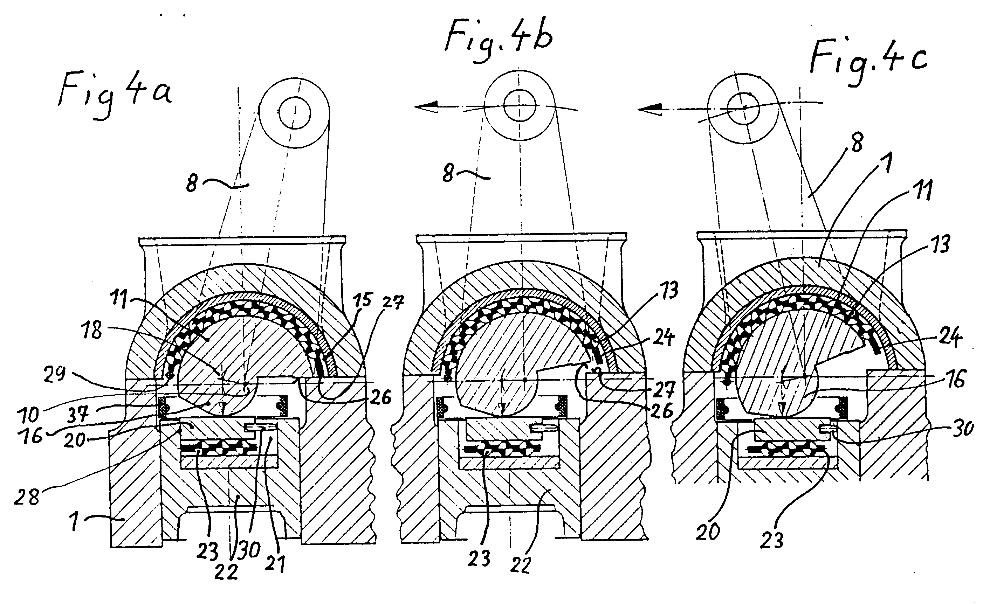

Zum Bremsen ist der Drehhebel 8 entgegen dem Uhrzeigersinn zu drehen, wie es in Fig.4b dargestellt ist; auch in Fig.1 ist eine derartige Bremsstellung gezeigt. Der Drehhebel 8 sowie die Käfige 14 heben sich dabei von der Anschlagfläche 27 ab und der Exzenter 16 verschiebt über die Druckplatte 20 und die Rollenlagerung 23 die Traverse 22 in Richtung zur Bremsscheibe 2. Die Zylinderfläche 17 des Exzenters 16 rollt dabei auf der Druckplatte 20 ab, wobei letztere in der Ausnehmung 21 seitlich in Abheberichtung von der Seitenwandung 28 entgegen der Kraft der Feder 30 bewegt wird, wodurch reibbehaftete Relativverschiebungen zwischen dem Exzenter 16 und der Druckplatte 20 vermieden werden. Bei den erwähnten Bewegungen werden somit durch die Rollenlagerungen 13 und 23 sowie die Querverschieblichkeit der Druckplatte 20 alle Gleitreibungen im Kraftweg von dem Drehhebel 8 bis zur Traverse 22 vermieden. Die vorstehend erwähnte Verschiebung der Traverse 22 in Richtung zur Bremsscheibe 2 wird durch die Verschraubung der Traverse 22 mit den Gewinderohren 31a und 31b auf letztere übertragen, welche hierbei über die Druckstücke 32 die Bremsbacke 6 an die Bremsscheibe 2 anlegen. Zugleich oder anschließend hierzu erfährt der Bremssattel 1 eine geringe Verschiebung gemäß Fig.1 nach rechts, wodurch auch die Bremsbacke 3 an die Bremsscheibe 2 angelegt wird. Dieser Zustand ist in Fig.1 dargestellt. Beim Weiterdrehen des Drehhebels 8 gemäß Fig.4c wird unter elastischer Verspannung ein festes Zuspannen der Scheibenbremse erreicht.

Bei den Schwenkbewegungen des Drehhebels 8 zum Zuspannen der Scheibenbremse wird die Blattfeder 39 verformt, wobei sie durch ihren Eingriff in die Seitenverzahnung 14 den Zahnriemen 37 etwas gemäß Fig.3 nach rechts verschiebt. Der Zahnriemen 37 führt daher eine geringe Drehbewegung um die Zahnräder 36a und 36b aus, wobei die letzteren mitgedreht werden und ihre Drehbewegung über die Innennocken 35 auf die Gewinderohre 31a und 31b übertragen. Die Gewinderohre 31a und 31b verschrauben sich dabei zueinander völlig synchron etwas in Annäherungsrichtung an die Bremsscheibe 2, wodurch ein zu großes Lüftspiel nachgestellt wird. Beim nachfolgenden Lösen der Scheibenbremse wird der Drehhebel 8 seine in Fig.4a gestellte Ausgangslage zurückgeschwenkt, wobei sich die Blattfeder 39 unter Entspannen mit ihrem zahnriemenseitigen Ende etwas in der Seitenverzahnung 40 zurückbewegt, ohne aber bereits in die nächste Zahnlücke der Seitenverzahnung 40 einrasten zu müssen: dieses Einrasten erfolgt nur, falls durch vorangehenden Verschleiß der Drehhebel 8 einen relativ großen Schwenkhub bis zum Erreichen seiner Lösestellung ausführen muß. Alle anderen Teile der Scheibenbremse kehren beim Lösen in ihre Ausgangsstellung zurück.

Selbstverständlich sind Abänderungen vom vorstehend beschriebenen Ausführungsbeispiel möglich. So kann insbesondere die Blattfeder 39 derart ausgebildet und angeordnet sein werden, daß sie nur bei übermäßig großen Lösehüben des Drehhebels 8 den Zahnriemen 37 in Nachstellrichtung bewegt. Es ist auch möglich, die einen Antrieb für die Spielnachstellvorrichtung darstellende Blattfeder 39 mit der Seitenverzahnung 40 durch eine andere, nur bei großem Hub des Drehhebels 8 wirksame, synchrone Antriebsvorrichtung für die Zahnräder 36a und 36b und/oder die Verschraubung der Gewinderohre 31a und 31b mit der Traverse 22 durch eine andersartige, bekannte Längenverstellvorrichtung zu ersetzen, welche zwischen der Traverse 22 und letztlich der Bremsbacke 6 wirksam ist.

Kurzfassung:

Die Scheibenbremse für Fahrzeuge weist einen Bremssattel 1 auf, welcher zur mechanischen Zuspannung einen zentralen Drehhebel 8 trägt. Der Drehhebel 8 wirkt über einen Exzenter 16 auf eine Traverse 22, deren beide Enden unter Zwischenordnen je einer Nachstellvorrichtung auf eine Bremsbacke 6 einzuwirken vermögen. Der Drehhebel 8 ist vermittels einer Rollenlagerung 13 im Bremssattel 1 und der Exzenter 16 vermittels einer Rollenlagerung 23 gegenüber der Traverse 22 wälzgelagert. Durch diese Wälzlagerungen werden verschleißbehaftete und den Betätigungswirkungsgrad mindernde Gleitreibungen vermieden.

Bezugszeichenliste

| 1 | Bremssattel |
| 2 | Bremsscheibe |
| 3 | Bremsbacke |
| 4 | Bremsbelag |
| 5 | Zuspannvorrichtung |
| 6 | Bremsbacke |

| | |
|---|---|
| 7 | Bremsbelag |
| 8 | Drehhebel |
| 9 | Achse |
| 10 | Drehachse |
| 11 | Ansatz |
| 12 | halbzylindrische Fläche |
| 13 | Rollenlagerung |
| 14 | Käfig |
| 15 | innenzylindrische Fläche |
| 16 | Exzenter |
| 17 | Zylinderfläche |
| 18 | Achse |
| 19 | Radialebene |
| 20 | Druckplatte |
| 21 | Ausnehmung |
| 22 | Traverse |
| 23 | Rollenlagerung |
| 24 | Käfig |
| 25 | Grundfläche |
| 26 | Anschlagfläche |
| 27 | Anschlagfläche |
| 28 | Seitenwandung |
| 29 | Feder |
| 30 | Feder |
| 31a,b | Gewindeohr |
| 32 | Druckstück |
| 33 | Rückseite |
| 34 | Längsnut |
| 35 | Innennocken |
| 36a,b | Zahnrad |
| 37 | Zahnriemen |
| 38 | Ausnehmung |
| 39 | Blattfeder |
| 40 | Seitenverzahnung |
| 41 | Feder |

**Patentansprüche**

1. Scheibenbremse für Fahrzeuge, insbesondere Straßenfahrzeuge, mit einem auf einer Seite einer Bremsscheibe (2) eine Zuspannvorrichtung (5) aufweisenden Bremssattel (1), wobei die Zuspannvorrichtung (5) einen um eine Drehachse (10) drehbaren Exzenter (16) aufweist, der mittels eines Drehhebels (8) drehbar ist, der radial von der Drehachse (10) auskragt, die ihrerseits die Achse (9) der Bremsscheibe (2) rechtwinklig kreuzt, und wobei der Exzenter (16) über ein parallel zur Achse (9) der Bremsscheibe (2) verschiebliches Druckstück mit integrierter Spielnachstellvorrichtung mit einer verschieblich im Bremssattel (1) gelagerten Bremsbacke (6) in Wirkverbindung steht, gekennzeichnet durch die Kombination der Merkmal, daß

   - der Drehhebel (8) beidseitig je einen etwa halbzylindrischen Ansatz (11) trägt, deren der Bremsscheibe (2) und dem Exzenter (16) abgewandte, zur Drehachse (10) gleichachsige, halbzylindrische Flächen (12) über je eine Rollenlagerung (13) gegen entsprechend innenzylindrische Flächen (15) des Bremssattels (1) drehbar abgestützt sind,

   - die beiden Ansätze (11) bremsscheibenseitig und den halbzylindrischen Flächen (12) abgewandt den über ihre axiale Länge durchgehend ausgebildeten Exzenter (16) tragen,

   - am Exzenter (16) bremsscheibenseitig eine zur Radialebene (19) der Bremsscheibe (2) parallel verlaufende Druckplatte (20) anliegt, die andererseits über eine ebene Rollenlagerung (23) tangential zum Exzenter (16) begrenzt verschieblich am mitleren Bereich einer Traverse (22) abgestützt ist,

   - die sich parallel zur Radialebene (19) der Bremsscheibe (2) erstreckende Traverse (22) senkrecht zu dieser Radialebene (19) verschieblich am Bremssattel (1) gelagert ist und an ihren beiden Enden mit je einem sich rechtwinklig zur Radialebene (19) erstreckenden und raltiv zum Bremssattel (1) verschieblichen Gewinderohr ( 31a, 31b) verschraubt ist, deren jedes gegen die Rückseite (33) der Bremsbacke (6) abgestützt ist, und

   - die beiden Gewinderohre (31a,31b) mittels eines sie verbindenden Synchronantriebes, bestehend aus auf den Gewinderohren axialverschieblich, aber undrehbar gelagerten Zahnrädern (36a,36b), nur synchron drehbar sind.

2. Scheibenbremse nach Anspruch 1, dadurch gekennzeichnet, daß die mit den halbzylindrischen Flächen (12) zusammenwirkenden Rollenlagerungen (13) etwa halbzylindrisch mit in einem Käfig (14) geführten Rollen ausgebildet sind, wobei die Käfige (14) in ihren gelöster Scheibenbremse entsprechenden Drehlagen endseitig an Anschlagflächen (27) des Bremssattels (1) anschlagen und in Drehrichtung zu diesen Anschlagflächen (27) federbelastet (29) sind.

3. Scheibenbremse nach Anspruch 2, dadurch gekennzeichnet, daß der Drehhebel (8) bzw. ein mit diesem verbundenes Teil in seiner einer gelösten Scheibenbremse entsprechenden Drehlage an einer Anschlagfläche (27) des Bremssattels (1) anschlägt.

4. Scheibenbremse nach Anspruch 1,2 oder 3, dadurch gekennzeichnet, daß die Druckplatte (20) sich in einer sie seitlich umfassenden Ausnehmung (21) der Traverse (22) befindet, bei gelöster Scheibenbremse entsprechender Drehlage des Exzenters (16) an einer Seitenwandung (28) der Ausnehmung (21) anliegt und in Richtung zu diesem Anliegen von einer Feder (30) belastet ist.

5. Scheibenbremse nach einem oder mehreren der vorstehenden Ansprüche, gekennzeichnet durch eine zwischen dem Bremssattel (1) und der Traverse (22) eingespannte, letztere in Entfernungsrichtung von der Bremsscheibe (2) belastende Feder (41).

6. Scheibenbremse nach einem oder mehreren der vorstehenden Ansprüche, dadurch gekennzeichnet, daß die Zahnräder (36a,36b durch einen Zahnriemen (37) oder dergleichen gekoppelt sind.

7. Scheibenbremse nach Anspruch 6, gekennzeichnet durch eine mit ihrem einen Ende am Drehhebel (8) bzw. einem mit diesem verbundenen Teil befestigte Feder (39), die mit ihrem anderen Ende in eine gegebenenfalls seitliche Zahnung (40) des Zahnriemens (37) eingreift und diesen bei Schwenkbewegungen des Drehhebels (8) klinkengetriebeartig in einer Richtung fördert.

**Claims**

1. Disc brake for vehicles, in particular road vehicles, having a calliper (1) having on one side of a brake disc (2) a tightening device (5), with the tightening device (5) having a cam (16) rotatable about an axis of rotation (10), the cam (16) being rotatable by means of a rotary lever (8), which projects radially from the axis of rotation (10), which for its part crosses the axis (9) of the brake disc (2) at right angles, and the cam (16) being in operative connection with a brake block (6), mounted in a displaceable manner in the calliper (1), via a thrust piece with integrated clearance-adjusting device, the thrust piece being displaceable parallel to the axis (9) of the brake disc (2), characterized by the combination of the features, wherein
   - the rotary lever (8) on both sides in each case carries an approximately semi-cylindrical attachment (11), the semi-cylindrical faces (12) of which, directed away from the brake disc (2) and the cam (16) and coaxial with the axis of rotation (10), are rotatably supported by means of a roller bearing (13) in each case against appropriately internally cylindrical faces
   (15) of the calliper (1),
   - the two attachments (11) carry on the side of the brake disc and directed away from the semi-cylindrical faces (12) the cam (16) constructed continuously over their axial length,
   - a pressure plate (20) extending in parallel with the radial plane (19) of the brake disc (2) abuts the cam (16) on the side of the brake disc and on the other side being supported on the middle region of a cross arm (22) by means of a plane roller bearing (23) in such a way that it is displaceable tangentially to the cam (16) to a limited extent.
   - the cross arm (22) extending in parallel with the radial plane (19) of the brake disc (2) is mounted in a displaceable manner on the calliper (1) perpendicular to this radial plane (19) and at both ends is in each case screwed to a threaded tube (31a,31b) extending at right angles to the radial plane (19) and displaceable relative to the calliper (1), each threaded tube being supported against the rear side (33) of the brake block (6), and
   - the two threaded tubes (31a,31b) can only be rotated synchronously by means of an automatic synchronizer connecting them, consisting of gear wheels (36a,36b) which are axially displaceable on the threaded tubes but mounted so that they cannot be rotated.

2. Disc brake according to claim 1, characterized in that the roller bearings (13) cooperating with the semi-cylindrical faces (12) are constructed in approximately semi-cylindrical manner with rollers guided in a cage (14), with the cages (14) in their rotary positions corresponding with released disc brake stopping on the end side against stop faces (27) of the calliper (1) and being spring-loaded (29) in the direction of rotation of these stop faces (27).

3. Disc brake according to claim 2, characterized in that the rotary lever (8) or a part connected therewith in its rotary position corresponding with a released disc brake stops against a stop face (27) of the calliper (1).

4. Disc brake according to claim 1, 2 or 3, characterized in that the pressure plate (20) is located in a recess (21) of the cross arm (22), the recess encompassing the pressure plate laterally, in the rotary position of the cam (16) corresponding with released disc brake abuts a side wall (28) of the recess (21) and in the direction of this abutment is loaded by a spring (30).

5. Disc brake according to one or several of the above claims, characterized by a spring (41) clamped between the calliper (1) and the cross arm (22) and loading the latter in the direction removed from the brake disc (2).

6. Disc brake according to one or several of the above claims, characterized in that the gear wheels (36a,36b) are coupled by a gear belt (37) or suchlike.

7. Disc brake according to claim 6, characterized by a spring (39) fastened by its one end to the rotary lever (8) or to a part connected therewith, with the spring engaging with its other end into a possibly lateral gearing (40) of the gear belt (37) and conveying this in one direction with rotating movements of the rotary lever (8) in the manner of a ratchet gearing.

**Revendications**

1. Frein à disque pour des véhicules, en particulier pour des véhicules sur route, avec un étrier de frein (1) comportant sur un côté d'un disque de frein (2) un dispositif de serrage (5), du type dans lequel le dispositif de serrage (5) comporte un excentrique (16) susceptible de tourner autour d'un axe de rotation (16) qui est susceptible de basculer à l'aide d'un levier basculant (8) qui s'étend radialement à partir de l'axe de rotation (10) qui, à son tour, croise à angle droit l'axe (9) du disque de frein (2), et dans lequel l'excentrique (16) est en liaison opérative avec une mâchoire de frein (6) montée à déplacements dans l'étrier de frein, par l'intermédiaire d'une pièce de pression à dispositif intégré de rattrapage de jeu et déplaçable parallèlement à l'axe (9) du disque de frein (2), caractérisé par la combinaison des particularités suivantes :

- le levier basculant porte, répartis sur deux côtés des appendices sensiblement semi-cylindriques (11), dont les surfaces semi-cylindriques (12) qui sont éloignées du disque de frein (2) et de l'excentrique (16) et qui sont coaxiales à l'axe de rotation (10), sont en appui rotatif, respectivement par l'intermédiaire d'un roulement à rouleaux (13), sur des surfaces cylindriques intérieures correspondantes (15) de l'étrier de frein (1).

- les deux appendices (11) portent, du côté voisin du disque de frein et du côté éloigné des surfaces semi-cylindriques (12), l'excentrique (16) réalisé d'un seul tenant sur leurs longueurs axiales.

- contre l'excentrique (16) et du côté du disque de frein, porte une plaque de pression (20) qui s'étend parallèlement au plan radial (19) du disque de frein (2) et qui, par ailleurs et par l'intermédiaire d'un palier à rouleaux plan (23), est supportée par la zone médiane d'une traverse (22), avec possibilité limitée de déplacement tangentiel par rapport à l'excentrique (16),

- la traverse (22) qui s'étend parallèlement au plan radial (19) de disque de frein (2), est monté sur l'étrier de frein (1) de manière à pouvoir se déplacer perpendiculairement à ce plan radial (19) et elle est vissée, à ces deux extrémités avec respectivement un tube fileté (31a, 31b) s'étendant perpendiculairement au plan radial (19) avec possibilité de déplacement par rapport à l'étrier de frein (1), chacun de ces tuyaux filetés prenant appui contre la face arrière (33) de la mâchoire de frein (6), et

- les deux tubes filetés ((31a, 31b) ne sont susceptibles de tourner qu'en synchronisme à l'aide d'une transmission synchrone les reliant, et constitué par des pignons (36 a, 36 b) qui sont déplaçables axialement sur les tubes filetés mais montés de manière à ne pas pouvoir tourner

2. Frein à disque selon la revendication 1, caractérisée par le fait que les paliers à rouleaux (13) qui coopèrent avec les surfaces semi-cylindriques (12) sont sensiblement semi-cylindriques avec des rouleaux guidés dans une cage (14), les cages (14) butant, dans leurs positions angulaires qui correspondent au frein desserré unilatéralement contre des surfaces de butée (27) de l'étrier de frein (1), et étant chargées par des ressorts (29) dans le sens de rotation vers ces surfaces de butée (27)

3. Frein à disque selon la revendication 2, caractérisé par le fait que le levier basculant (8) ou une pièce qui y est reliée vient porter, dans sa position angulaire de rotation qui correspond au frein à disque desserré, contre une surface de butée (27) de l'étrier de frein.

4. Frein à disque selon la revendication 1, 2 ou 3, caractérisé par le fait que la plaque de pression (20) se trouve dans une ouverture (21) de la traverse (22), qui l'entoure latéralement, qu'elle porte ou est appliquée , pour une position angulaire de rotation de l'excentrique (16) qui correspond au desserrage du frein à disque, contre une paroi latérale (28) de l'ouverture (21), et qu'elle est chargée par un ressort (30) dans le sens de cette application.

5. Frein à disque selon une ou plusieurs des revendications précédentes caractérisé par un ressort (41), armé entre l'étrier de frein (1) et la traverse (22) et chargeant cette dernière dans le sens de l'éloignement par rapport au disque de frein (2)

6. Frein à disque selon une ou plusieurs des revendications précédentes, caractérisé par le fait que les pignons (36a, 36b) sont accouplés à l'aide d'une courroie dentée (37) ou similaire

7. Frein à disque selon la revendication b, caractérisé par un ressort (39) fixé par une de ses extrémités au levier basculant (8) ou à une pièce reliée à ce dernier et attaquant par son autre extrémité une denture éventuellement latérale (40) de la courroie dentée et déplacant cette dernière dans une direction, à la manière d'un cliquet, lors de déplacements basculants dudit levier (8).

Fig. 1

Fig.2

EP 0 291 071 B1

Fig. 3

Fig 4a

Fig.4b

Fig.4c

11 18 29 10 37 16 20 28 1

15 27 26

23 30 22 21

13 24 27 26

23 22

8 1 11 13 24 16 30 20 23

EP 0 291 071 B1